# EUROPÄISCHE PATENTSCHRIFT

(11) **EP 2 572 937 B1**
(45) Veröffentlichungstag und Bekanntmachung des Hinweises auf die Patenterteilung: **08.11.2017**
(21) Anmeldenummer: 12184906.1
(22) Anmeldetag: 18.09.2012
(51) Int. Cl.: B60Q 7/00

(54) **Pannen- und/oder Unfall-Sicherungsmittel und Verfahren zur Absicherung einer Unfallstelle und/oder eines Unfall- und/oder Pannenfahrzeuges.**
Breakdown and/or accident safety device and method to secure a place of an accident or a breakdown.
Moyen et méthode de sécurisation vis-à-vis des accidents et/ou des pannes.

(30) Priorität: 21.09.2011 DE 102011113840
(43) Veröffentlichungstag der Anmeldung: 27.03.2013
(73) Patentinhaber: Knopp, Stephan, 51643 Gummersbach (DE); Knopp, Christian, 51643 Gummersbach (DE)
(72) Erfinder: Knopp, Stephan, 51643 Gummersbach (DE); Knopp, Christian, 51643 Gummersbach (DE)
(74) Vertreter: Wolff, Felix

(56) Entgegenhaltungen:
- DE-A1- 3 334 927
- DE-A1- 3 533 023
- DE-A1-102006 025 894
- DE-U- 1 954 345
- DE-U1- 8 807 553
- DE-U1- 9 415 432
- DE-U1-202010 001 775
- US-A- 3 880 537
- US-A1- 2003 132 607
- US-A1- 2008 260 458
- US-A1- 2010 215 431
- US-B1- 7 736 087

## Beschreibung

Die vorliegende Erfindung betrifft ein Pannen- und/oder Unfall-Sicherungsmittel gemäß dem Oberbegriff des Patentanspruchs 1. Des Weiteren betrifft die Erfindung ein Verfahren zur Absicherung einer Unfallstelle und/oder eines Unfall- und/oder Pannenfahrzeuges mit einem derartigen Pannen- und/oder Unfall-Sicherungsmittel.

Der Sicherung von Unfallstellen oder Pannenfahrzeugen, die beispielsweise auf dem Standstreifen oder der linken Fahrbahn einer Autobahn abgestellt sind, gegen auffahrende Fahrzeuge kommt eine im größere Bedeutung zu. Für derartige Situationen haben viele Lastkraftwagen (LKW) mittlerweile mobile Schwellen an Bord, die, beispielsweise im Falle einer Panne, in einem hinreichenden Sicherheitsabstand hinter dem LKW, beispielsweise auf dem Standstreifen, platziert werden. Überfährt nun ein Kraftfahrzeug diese Schwellen, beispielsweise weil der Fahrer eingeschlafen ist, wird er beim Überfahren dieser Schwellen wieder geweckt und kann bremsen und/oder Lenken bevor das Kraftfahrzeug auf den LKW auffährt. So kann beispielsweise die Panne beseitigt werden, ohne dass Personen gefährdet werden. Für Personenkraftwagen (PKW) sind derartige Schwellen jedoch zu schwer und zu sperrig. Darüber hinaus haben Schwellen den Nachteil, dass eine Person den Standstreifen betreten muss, um die Schwellen auszulegen bzw. einzuladen.

Aus der US 3 880 537 A ist ein Pannen- und/oder Unfall-Sicherungsmittel mit mehreren Warnmitteln bekannt, die beim Überfahren mit einem Kraftfahrzeug zumindest einen Stoß und/oder ein akustisches Signal erzeugen. Die Warnmittel sind z. B. über mehrere Kabel miteinander verbunden.

In der DE 35 33 023 A1 wird ein Abschleppseil beschrieben, in dessen mittlerem Bereich eine Einrichtung angebracht ist, die bei der Berührung mit der Fahrbahndecke während einer Abschleppfahrt ein akustisches Signal erzeugt.

US 2003/132 607 A1 offenbart eine Abschleppvorrichtung mit mehrere Stangen, die über mehrere Gelenke miteinander verbunden sind.

Schließlich wird in der DE 20 2010 001 775 U1 ein Warnsicherheitsgummiband mit Reflektoren beschrieben, welches mit einer Schlaufe an einem Leitpfosten befestigt wird, während das andere Ende des Warnsicherheitsbands mit mehrere Abstandshaken an einem liegengebliebenen Fahrzeug befestigt ist.

In der DE 19 54 345 U wird ein Pannen- und/oder Unfall-Sicherungsmittel mit mehreren Warnmitteln beschrieben, das als Abschleppseil ausgebildet sein kann.

Es war die Aufgabe der vorliegenden Erfindung, ein Pannen- und/oder Unfall-Sicherungsmittel zur Verfügung zu stellen, das die Nachteile des Standes der Technik nicht aufweist.

Gelöst wird die Aufgabe mit einem Pannen- und/oder Unfall-Sicherungsmittel nach Patentanspruch 1.

Die vorliegende Erfindung betrifft ein Pannen- und/oder Unfall-Sicherungsmittel, mit dem ein Pannenfahrzeug oder eine Unfallstelle gegen auffahrende Kraftfahrzeuge gesichert werden kann. Das erfindungsgemäße Pannen- und/oder Unfall-Sicherungsmittel wird in einem hinreichenden Abstand, bezogen auf die Fahrrichtung der Fahrbahn auf und/oder neben der das Fahrzeug steht oder auf der Unfall stattgefunden hat, hinter dem Pannenfahrzeug bzw. der Unfallstelle ausgelegt. Beim Überfahren der Pannen- und/oder Unfall-Sicherungsmittel wird der Fahrer des überfahrenden Kraftzeuges gewarnt und kann dann noch so reagieren, dass er nicht auf das Pannenfahrzeug auf- oder in die Unfallstelle hineinfährt. Das erfindungsgemäße Pannen- und/oder Unfall-Sicherungsmittel ist leicht in einem PKW zu verstauen und weist nur ein geringes Gewicht auf. In einer bevorzugten Ausführungsform kann das Pannen- und/oder Unfall-Sicherungsmittel auch als Abschleppmittel eingesetzt werden. Das erfindungsgemäße Pannen- und/oder Unfall-Sicherungsmittel kann auf einer Fahrbahn platziert werden, ohne dass diese betreten werden muss. Dadurch wird eine Gefährdung der auslegenden Person vermieden. Beispielsweise wird mindestens ein Ende, vorzugsweise beide Enden, des Pannen-und/oder Unfall-Sicherungsmittels an einer Leitplanke von einer Person festgemacht, die auf der der Fahrbahn abgewandten Seite der Leitplanke steht, und dann auf die Fahrbahn, insbesondere den Standstreifen oder die linke Fahrbahn einer Autobahn, gelegt und/oder geworfen. Dabei kann das Trägermittel so auf die Fahrbahn geworfen werden, dass es beispielsweis eine I-, Z-, U-, V- N-, W-oder M-Form einnimmt. Die fünf letztgenannten Formen haben den Vorteil, dass ein Rad des überfahrenden Kraftfahrzeuges das Trägermittel mehrfach überfährt, so dass mehrere, für den Fahrer wahrnehmbare Stöße entstehen.

Gemäß einem anderen Beispiel stellt sich eine Person, die zwischen zwei Betonabweisern steht, auf mindestens ein, vorzugsweise beide Enden des Pannen- und/oder Unfall-Sicherungsmittels und legt und/oder wirft es dann auf die Fahrbahn, insbesondere die linke Fahrspur. Ansonsten wird auf das obige Beispiel verwiesen.

Erfindungsgemäß weist das Pannen- und/oder Unfall-Sicherungsmittel ein flexibles Trägermittel auf, das sich im Wesentlichen über die gesamte Länge des Pannen- und/oder Unfall-Sicherungsmittels erstreckt. Flexibel im Sinne der Erfindung bedeutet, dass das Trägermittel reversibel beispielsweise zusammengerollt, zusammengeschoben und/oder zusammengefaltet werden kann und dass es auf der Fahrbahn die gewünschte Form einnimmt. Dadurch ist es möglich, dass das erfindungsgemäße Pannen- und/oder Unfall-Sicherungsmittel auf geringem Raum zu verstauen, es im Bedarfsfall aber in eine gewünschte, nahezu beliebig festlegbare Form zu bringen. Erfindungsgemäß handelt es sich bei dem Trägermittel um ein Seil. Das Trägermittel kann ein- oder mehrstückig vorgesehen sein, wobei im letzteren Fall die Stücke fest oder beweglich miteinander verbunden sind. Das Trägermittel kann innen hohl sein. Das Trägermittel ist vorzugsweise aus einem Kunststoffmaterial gefertigt.

Die Länge des gesamten Pannen- und/oder Unfall-Sicherungsmittels wird so gewählt, dass es mindestens der Breite des Standstreifens einer Fahrbahn, insbesondere einer Autobahn, vorzugsweise einer Autobahn im Gebiet der Bundesrepublik Deutschland entspricht. Erfindungsgemäß ist das Pannen- und/oder Unfall-Sicherungsmittel länger als 8 m, insbesondere 8-12 m, besonders bevorzugt 9 - 11 m.

Der Querschnitt des Trägermittels kann so gestaltet sein, dass beim Überfahren des Pannen- und/oder Unfall-Sicherungsmittels mit einem Kraftfahrzeug mindestens ein Stoß oder eine Vibration in diesem Kraftfahrzeug erzeugt wird. Diesen Stoß bzw. diese Vibration spürt der Fahrer des Fahrzeuges jeweils beim Überfahren des Pannen- und/oder Unfall-Sicherungsmittels mit dem Vorder- und dem Hinterrad. Dadurch wird Aufmerksamkeit geweckt. Der Querschnitt des Trägermittels kann eine beliebige Form aufweisen, solange der entsprechende Stoß bzw. die entsprechende Vibration erzeugt wird.

Erfindungsgemäß ist an dem Trägermittel mindestens ein, vorzugsweise mehrere, Warnmittel vorgesehen, das jeweils beim Überfahren des Pannen- und/oder Unfall-Sicherungsmittels mit einem Kraftfahrzeug mindestens einen Stoß oder eine Vibration in diesem Kraftfahrzeug und/oder ein akustisches Signal erzeugt. Dieses akustische Signal, beispielsweise in Form eines Knalls, ist für den Fahrer des überfahrenden Kraftfahrzeuges und/oder für Personen, die sich im Bereich der Pannen- oder Unfallstelle befinden, wahrnehmbar, die dann entsprechend reagieren können. Vorzugsweise wird dieses Warnmittel beim Überfahren zumindest teilweise zerstört wodurch ein Geräusch, beispielsweise ein Knall oder ein Pfiff, entsteht. Alternativ oder zusätzlich entweicht beim Überfahren ein Medium aus dem Warnmittel, wodurch ein Geräusch, beispielsweise ein Pfiff entsteht. Vorzugsweise ist das Warnmittel innen hohl oder aus einem Vollmaterial gefertigt. Gemäß einer anderen bevorzugten Ausführungsform weist das Warnmittel eine innere Stützstruktur, beispielsweise Waben auf. Vorzugsweise ist der Abstand zwischen zwei Warnmitteln geringer als die minimale Breite eines für ein Kraftfahrzeug in Deutschland zugelassenen Reifens. Vorzugsweise sind die Warnmittel äquidistant entlang des Trägermittels angeordnet. Jedes Warnmittel ist vorzugsweise form- kraft- und/oder stoffschlüssig mit dem Trägermittel verbunden.

Erfindungsgemäß weist das Pannen- und/oder Unfall-Sicherungsmittel zwei Verbindungsmittel auf, wobei ein Verbindungsmittel an einem Ende des Trägermittels angeordnet ist. Das andere Verbindungsmittel kann an dem anderen Ende des Trägermittels befestigt sein. Dadurch können beide Enden beispielsweise mit einer Leitplanke am Straßenrand verbunden werden. Zusätzlich kann das Pannen- und/oder Unfall-Sicherungsmittel als Abschleppmittel eingesetzt werden. Es ist deshalb vorteilhaft, dass das Verbindungsmittel mit einem Abschlepphaken eines Kraftfahrzeuges und mit einer Leitplanke verbindbar vorgesehen ist. Erfindungsgemäß sind ein oder mehrere Verbindungsstellen an dem Trägermittel für das zweite Verbindungsmittel abseits von den beiden Enden des Trägermittels vorgesehen. Beispielsweise kann bei einem 10 m langen Trägermittel eine Verbindungsstelle für das Verbindungsmittel 3,3 m entfernt von dem anderen Ende des Trägermittels vorgesehen sein, um beispielsweise das Pannen- und/oder Unfall-Sicherungsmittel in N-Form auslegen zu können. Die Verbindungsmittel können aus einem starren und/oder einem flexiblen Werkstoff gefertigt sein.

Vorzugsweise ist das Pannen- und/oder Unfall-Sicherungsmittel auch ein Abschleppseil. Vorzugsweise ist das Pannen- und/oder Unfall-Sicherungsmittel zumindest teilweise lichtreflektierend, so dass es auch als optisches Warnmittel funktioniert. Vorzugsweise weist das Pannen- und/oder Unfall-Sicherungsmittel mindestens ein Leuchtmittel, beispielweise in Form von mindestens einer LED oder OLED auf. Dadurch kann die Unfall- oder Pannenstelle zusätzlich optisch, beispielweise durch leuchtendes und/oder blinkendes Licht, abgesichert werden. Besonders bevorzugt ist an oder in dem Trägermittel eine Energiequelle vorgesehen, mit der das Leuchtmittel betrieben wird.

Ein weiterer Gegenstand der vorliegenden Erfindung ist ein Verfahren zur Absicherung einer Unfallstelle und/oder eines Unfall- und/oder Pannenfahrzeuges mit einem Pannen- und/oder Unfall-Sicherungsmittel, wobei das Pannen- und/oder Unfall-Sicherungsmittel, vorzugsweise an einer Leitplanke befestigt, und dann zumindest auf dem Standstreifen oder einer Fahrspur der Fahrbahn ausgebracht wird.

Die zu dem erfindungsgemäßen Pannen- und/oder Unfall-Sicherungsmittel gemachten Ausführungen gelten für das erfindungsgemäße Verfahren gleichermaßen und umgekehrt. Bei dem erfindungsgemäßen Verfahren werden vorzugsweise beide Enden eines Pannen-und/oder Unfall-Sicherungsmittel mit der Leitplanke einer Fahrbahn verbunden und das Pannen- und/oder Unfall-Sicherungsmittel dann zumindest auf dem Standstreifen der Fahrbahn ausgebracht. Das erfindungsgemäße Verfahren hat den Vorteil, dass die gesamte Anbringung des Pannen- und/oder Unfall-Sicherungsmittels von einer Person vorgenommen werden kann, die sich auf der der Fahrbahn abgewandten Seite der Leitplanke befindet. Diese Person befestigt die Enden des Pannen- und/oder Unfall-Sicherungsmittels an der Leitplanke und wirft und/oder legt dann das Trägermittel des Pannen- und/oder Unfall-Sicherungsmittels auf die Fahrbahn, ohne diese jemals selbst zu betreten. Das Auswerfen/Auslegen kann so oft wiederholt werden, bis das Pannen- und/oder Unfall-Sicherungsmittel die gewünschte Form auf der Fahrbahn einnimmt. Auch für die Demontage des Pannen- und/oder Unfall-Sicherungsmittels muss die Fahrbahn nicht betreten werden. Vorzugsweise wird das Pannen- und/oder Unfall-Sicherungsmittel I-, U-, V oder M-förmig auf der Fahrbahn ausgelegt.

Im Folgenden werden die Erfindungen anhand der Figuren 1 - 6 erläutert. Diese Erläuterungen sind lediglich beispielhaft und schränken den allgemeinen Erfindungsgedanken nicht ein. Die Erläuterungen gelten für beide Gegenstände der vorliegenden Erfindung gleichermaßen.
- **Figur 1**: zeigt zwei Ausführungsformen des erfindungsgemäßen Pannen- und/oder Unfall-Sicherungsmittels.
- **Figur 2**: zeigt mögliche Querschnittsformen des Trägermittels und eine Ausführungsform des Warnmittels.
- **Figuren 3- 6**: zeigen Ausführungsformen der Ausbringung des Pannen- und/oder Unfall-Sicherungsmittels auf einem Standstreifen.

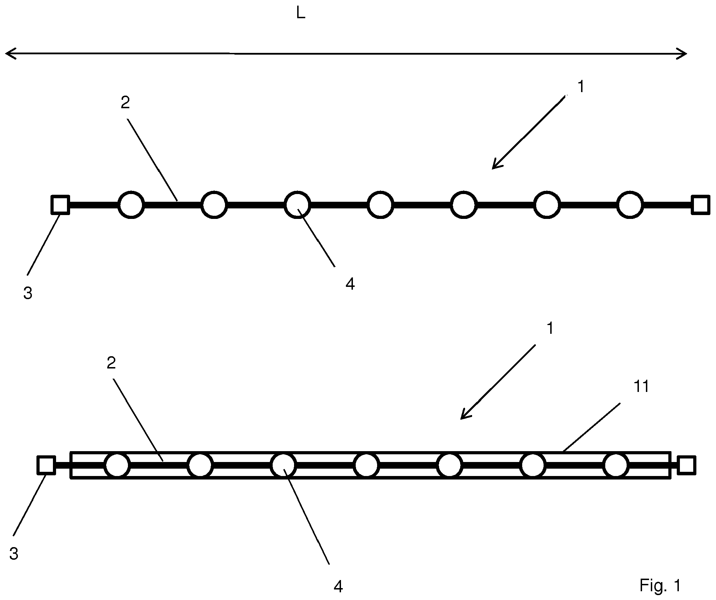

Figur 1 zeigt zwei Ausführungsformen des erfindungsgemäßen des Pannen- und/oder Unfall-Sicherungsmittels 1. Beide Ausführungsformen des Pannen- und/oder Unfall-Sicherungsmittels 1 weisen ein flexibles Trägermittel 2, hier ein Seil, das vorzugsweise aus Kunststoff, auf. An beiden Enden des Trägermittels 2 ist jeweils Verbindungsmittel 3, hier Haken, vorgesehen, die jeweils mit einer Leitplanke oder/oder deren vertikaler Stütze und mit einer Abschleppöse an einem Fahrzeug verbunden werden können. An dem Umfang des Trägermittels 2 sind eine Vielzahl von, hier kugelförmigen, Warnmitteln 4 äquidistant angeordnet. Die Länge L des Pannen- und/oder Unfall-Sicherungsmittels ist so vorgesehen, dass sie mindestens der Breite B eines Standstreifens 6 einer Fahrbahn 5 entspricht. Vorzugsweise beträgt die Länge L des erfindungsgemäßen Pannen- und/oder Unfall-Sicherungsmittels mindestens das Doppelte der Breite B. Das Trägermittel und/oder die Warnmittel können lichtreflektierend und/oder fluoreszierend vorgesehen sein. Bei der Ausführungsform gemäß der unteren Darstellung sind das Trägermittel 2 und die Warnmittel 4 zumindest abschnittsweise mit einer flexiblen Umhüllung versehen, die wahlweise lichtreflektierend, selbstleuchtend/blinkend und/oder fluoreszierend ist. Beim Überfahren des Pannen- und/oder Unfall-Sicherungsmittels mit einem Fahrzeug erfährt das überfahrende Kraftfahrzeug aufgrund des Querschnitts und des Materials des Trägermittels und/oder aufgrund des Querschnitts und/oder Materials des Warnmittels einen Stoß, den der Fahrer dieses überfahrenden Kraftfahrzeuges registriert und der seine Aufmerksamkeit weckt. Dadurch kann das Auffahren dieses Fahrzeug auf ein Unfall- oder Pannenfahrzeug verhindert werden. Alternativ oder zusätzlich entsteht dieser Stoß beim Überfahren der Warnmittel und/oder die Warnmittel platzen beim Überfahren, wodurch ein Geräusch entsteht, dass den Fahrer weckt oder dessen Aufmerksamkeit erregt. Vorzugsweise sind die Warnmittel hohl vorgesehen. Dadurch ist das Pannen- und/oder Unfall-Sicherungsmittel leichter und/oder die Geräuschentwicklung beim Platzen größer.

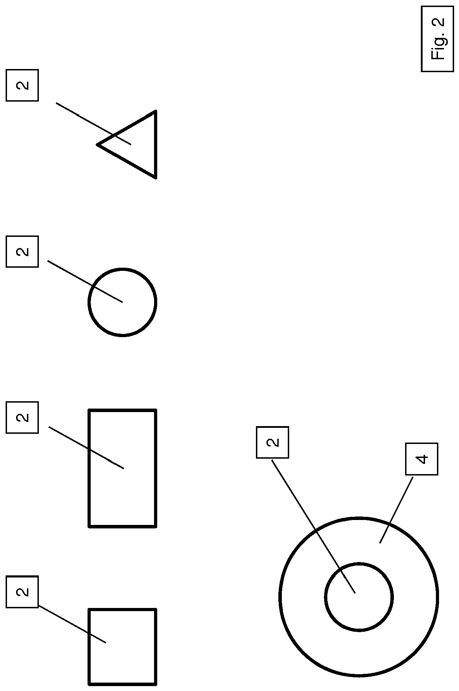

Figur 2 zeigt beispielhaft mögliche Querschnittsformen des Trägermittels. Alle Profile können hohl sein. Der Fachmann versteht das der Querschnitt auch fünfeckig oder > fünfeckig sein kann. Des Weiteren zeigt Figur 2 im unteren Teil eine Ausführungsform des Warnmittels 4. Dieses ist wie ein Tischtennisball gestaltet und stoffschlüssig mit dem Trägermittel 2 verbunden. Beim Überfahren platzt das Warnmittel 4, wodurch ein Knall entsteht. Vor dem Platzen kann das Warnmittel 4 noch einen Stoß in dem überfahrenden Kraftfahrzeug bewirken.

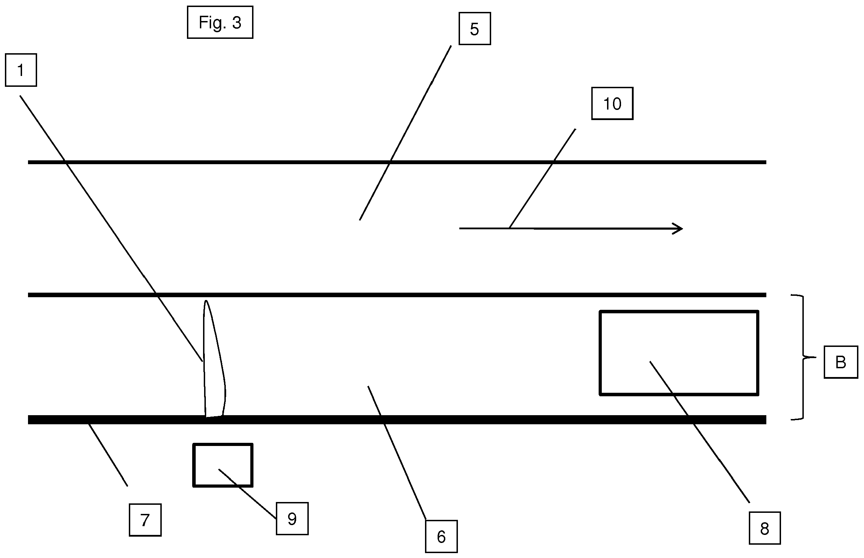

Figur 3 zeigt die Ausbringung des Pannen- und/oder Unfall-Sicherungsmittels auf dem Standstreifen 6 einer Fahrbahn 5, beispielsweise einer Autobahn. Die Fahrrichtung der Kraftfahrzeuge ist durch den Pfeil 10 symbolisiert. Im Fall einer Panne des Fahrzeuges 8, fährt der Fahrer auf den Standstreifen 6, steigt aus, übersteigt die Leitplanke 7 und geht mit dem Pannen- und/oder Unfall-Sicherungsmittel 1 auf der Fahrbahn abgewandten Seite der Leitplanke soweit entgegen der Fahrrichtung 10 bis er einen hinreichenden Abstand zu seinem Fahrzeug 8 hat. Dann befestigt er die beiden Verbindungsmittel 3 beispielsweise an dem vertikalen Pfosten der Leitplanke und/oder der Leitplanke selbst und wirft oder legt dann das Trägermittel 2 auf die Fahrbahn, so dass dieses die Breite B des Standstreifens 6 vorzugsweise vollständig überdeckt. In diesem Fall ist das Trägermittel 2 U- oder V-förmig auf dem Standstreifen angeordnet. Für den Fall, dass ein Fahrer, der ein Kraftfahrzeug auf der Fahrbahn 5 fährt, einschläft oder unachtsam wird und das Fahrzeug dadurch auf den Standstreifen 6 gerät, überfährt sein Kraftfahrzeug das Trägermittel 2. Dadurch erhalten die Vorder- und die Hinterräder jeweils zwei Stöße, die in das Kraftfahrzeug zumindest teilweise eingeleitet und von dem Fahrer registriert werden, wodurch er aufwacht oder seine Aufmerksamkeit erregt wird. Dadurch hat er Gelegenheit einen Aufprall auf das Pannenfahrzeug 8 zu vermeiden. Sobald Hilfe eingetroffen ist, kann das Pannen- und/oder Unfall-Sicherungsmittel demontiert und als Abschleppseil eingesetzt werden. Der Fahrer des Pannenfahrzeuges muss weder zur Montage noch zur Demontage des Pannen- und/oder Unfall-Sicherungsmittels den Standstreifen oder die Fahrbahn betreten.

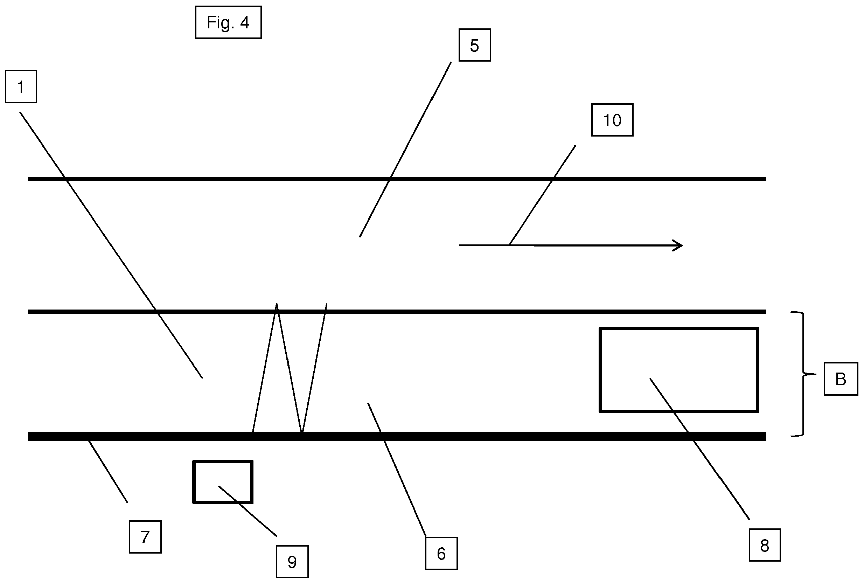

Die Ausführungsform gemäß Figur 4 entspricht im Wesentlichen der Ausführungsform gemäß Figur 3, nur dass in diesem Fall das Trägermittel 2 M-förmig angeordnet ist. Dadurch entstehen beim Überfahren vier Stöße pro Rad.

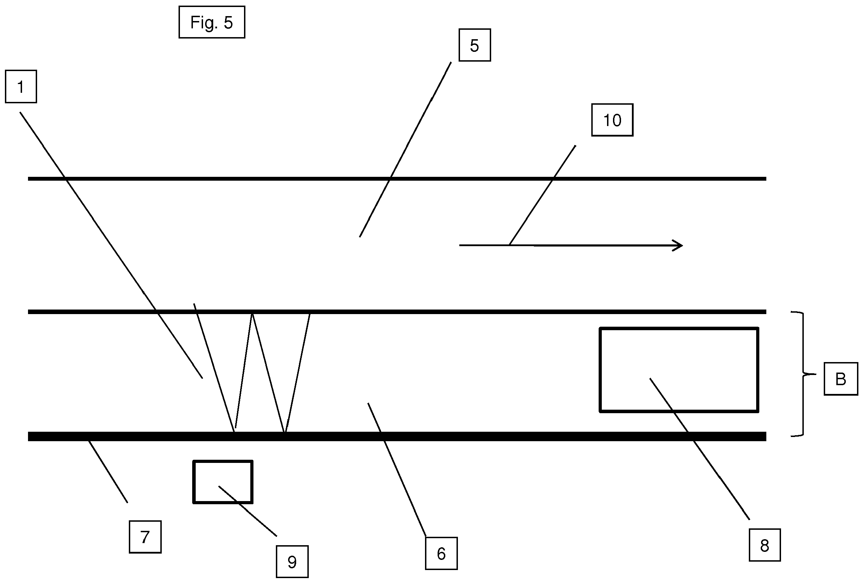

Die Ausführungsform gemäß Figur 5 entspricht im Wesentlichen der Ausführungsform gemäß Figur 3, nur dass in diesem Fall das Trägermittel 2 W-förmig angeordnet ist. Dadurch entstehen beim Überfahren vier Stöße pro Rad.

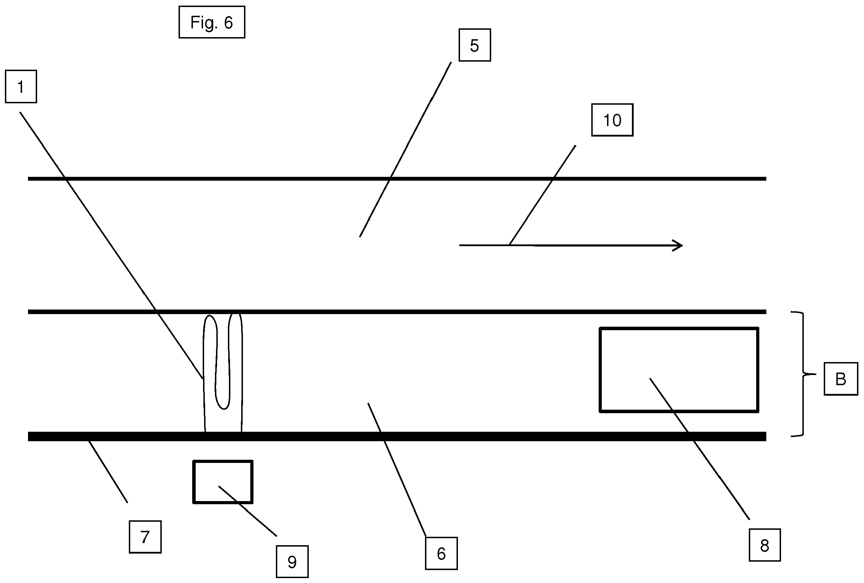

Die Ausführungsform gemäß Figur 6 entspricht im Wesentlichen der Ausführungsform gemäß Figur 3, nur dass in diesem Fall das Trägermittel 2 N-förmig angeordnet ist. Dadurch entstehen beim Überfahren drei Stöße pro Rad.

Der Fachmann versteht, dass gemäß einer alternativen Ausführungsform, sich eine Person auf mindestens ein Ende des Pannen- und/oder Unfall-Sicherungsmittels stellt, wobei diese Person vorzugsweise hinter einer Leitplanke oder einem Betonabweiser steht, und dann das Trägermittel so auf die Fahrbahn wirft, dass es vorzugsweise eine der gemäß den Figuren 3 - 6 beschriebenen Formen einnimmt.

### Bezugszeichenliste:

- 1: Pannen- und/oder Unfall-Sicherungsmittel
- 2: flexibles Trägermittel, flexibles Kunststoffteil und/oder flexibles Metallteil, Seil, Band, Schlauch
- 3: Verbindungsmittel, Hacken, Schäkel
- 4: akustisches-, vibratorisches- und/oder optisches Warnmittel
- 5: Fahrbahn
- 6: Standstreifen
- 7: Leitplanke
- 8: Pannen-/Unfallfahrzeug
- 9: Person
- 10: Fahrtrichtung
- 11: Umhüllung
- L: Länge des Pannen- und/oder Unfall-Sicherungsmittels

## Patentansprüche

1. Pannen- und/oder Unfall-Sicherungsmittel (1) mit einem als Seil ausgebildeten flexiblen Trägermittel (2), an dem zwei Verbindungsmittel (3) vorgesehen sind, die mit einem Abschlepphaken und mit einer Leitplanke verbindbar vorgesehen sind, wobei ein erstes Verbindungsmittel (3) an einem ersten Ende des Trägermittels (2) angeordnet ist und ein zweites Verbindungsmittel (3) an dem zweiten Ende befestigbar ist, wobei an dem Trägermittel (2) mindestens ein Warnmittel (4) vorgesehen ist, das beim Überfahren des Pannen- und/oder Unfall-Sicherungsmittels (1) mit einem Kraftfahrzeug mindestens einen Stoß oder eine Vibration in diesem Kraftfahrzeug und/oder ein akustisches Signal erzeugt, wobei die Länge (L) des Trägermittels (2) mindestens 8 m beträgt, **dadurch gekennzeichnet, dass** ein oder mehrere Verbindungsstellen an dem Trägermittel (2) für das zweite Verbindungsmittel (3) abseits von den beiden Enden des Trägermittels (2) vorgesehen sind.

2. Pannen- und/oder Unfall-Sicherungsmittel (1) nach Anspruch 1, **dadurch gekennzeichnet, dass** die Länge (L) des Trägermittels (2) 8 m bis 12 m beträgt.

3. Pannen- und/oder Unfall-Sicherungsmittel (1) nach einem der voranstehenden Ansprüche, **dadurch gekennzeichnet, dass** das Warnmittel (4) hohl ist, aus einem Vollmaterial gefertigt ist oder eine innere Stützstruktur aufweist.

4. Pannen- und/oder Unfall-Sicherungsmittel (1) nach einem der voranstehenden Ansprüche, **dadurch gekennzeichnet, dass** das Warnmittel (4) beim Überfahren mit einem Kraftfahrzeug zumindest platzt.

5. Pannen- und/oder Unfall-Sicherungsmittel (1) nacheinem der voranstehenden Ansprüche, **dadurch gekennzeichnet, dass** es ein Abschleppseil ist.

6. Pannen- und/oder Unfall-Sicherungsmittel (1) nach einem der voranstehenden Ansprüche, **dadurch gekennzeichnet, dass** es zumindest teilweise lichtreflektierend, selbstleuchtend oder blinkend ist.

7. Verfahren zur Absicherung einer Unfallstelle und/oder eines Unfall- und/oder Pannenfahrzeuges mit einem Pannen- und/oder Unfall-Sicherungsmittel (1) gemäß einem der voranstehenden Ansprüche, **dadurch gekennzeichnet, dass** das Pannen-und/oder Unfall-Sicherungsmittel, an einer Leitplanke befestigt wird, und dann zumindest auf einer Fahrbahn ausgebracht wird.

8. Verfahren nach Anspruch 7, **dadurch gekennzeichnet, dass** beide Enden des Sicherungsmittels mit der Leitplanke verbunden werden.

9. Verfahren nach Anspruch 7, **dadurch gekennzeichnet, dass** das Pannen- und/oder Unfall-Sicherungsmittel (1) N-förmig auf der Fahrbahn ausgebracht wird.

## Claims

1. Breakdown and/or accident safety means (1) having a flexible carrier means (2) that is embodied as a rope and comprises two connecting means (3) that can be connected to a tow hook and to a crash barrier, wherein a first connecting means (3) is arranged on a first end of the carrier means (2), and a second connecting means (3) can be fastened to the second end, wherein at least one warning means (4) is provided on the carrier means (2) and, in the event of the breakdown and/or accident safety means (1) being run over with a motor vehicle, said warning means generates at least one shock or a vibration in said motor vehicle and/or an acoustic signal, wherein the length (L) of the carrier means (2) is at least 8 m, **characterised in that** one or multiple connecting sites are provided on the carrier means (2) for the second connecting means (3) away from the two ends of the carrier means (2).

2. Breakdown and/or accident safety means (1) according to claim 1, **characterised in that** the length (L) of the carrier means (2) is 8 m to 12 m.

3. Breakdown and/or accident safety means (1) according to any one of the preceding claims, **characterised in that** the warning means (4) is hollow, is produced from a solid material or comprises an inner supporting structure.

4. Breakdown and/or accident safety means (1) according to any one of the preceding claims, **characterised in that** in the event of being run over with a motor vehicle, the warning means (4) at least splits.

5. Breakdown and/or accident safety means according to any one of the preceding claims, **characterised in that** said breakdown and/or accident safety means is a tow rope.

6. Breakdown and/or accident safety means (1) according to any one of the preceding claims, **characterised in that** said breakdown and/or accident safety means is at least in part light-reflecting, self-illuminating or flashing.

7. Method for protecting an accident site and/or a vehicle that has broken down and/or been involved in an accident, said vehicle having a breakdown and/or accident safety means (1) in accordance with any one of the preceding claims, **characterised in that** the breakdown and/or accident safety means is fastened to a crash barrier and then extended at least onto a roadway.

8. Method according to claim 7, **characterised in that** the two ends of the safety means are connected to the crash barrier.

9. Method according to claim 7, **characterised in that** the breakdown and/or accident safety means (1) is extended in an N-shape on the roadway.

## Revendications

1. Moyen de sécurité pour panne et/ou accident (1) comportant un moyen de support (2) flexible réalisé comme corde, sur lequel sont ménagés deux moyens de raccordement (3), lesquels sont ménagés de manière raccordable à un crochet de remorquage et à une glissière de sécurité, dans lequel un premier moyen de raccordement (3) est disposé sur une première extrémité du moyen de support (2) et dans lequel un deuxième moyen de raccordement (3) peut être fixé sur la deuxième extrémité, dans lequel au moins un moyen d'avertissement (4) est ménagé sur le moyen de support (2), lequel lors de l'écrasement du moyen de sécurité pour panne et/ou accident (1) par un véhicule automobile génère au moins un coup ou une vibration dans ce véhicule automobile et/ou un signal acoustique, dans lequel la longueur (L) du moyen de support (2) est d'au moins 8 m, **caractérisé en ce qu'**un ou plusieurs points de raccordement sont ménagés sur le moyen de support (2) pour le deuxième moyen de raccordement (3) à l'écart des deux extrémités du moyen de support (2).

2. Moyen de sécurité pour panne et/ou accident (1) selon la revendication 1, **caractérisé en ce que** la longueur (L) du moyen de support (2) est de 8 m à 12 m.

3. Moyen de sécurité pour panne et/ou accident (1) selon l'une quelconque des revendications précédentes, **caractérisé en ce que** le moyen d'avertissement (4) est creux, **en ce qu'**il est fabriqué dans une matière pleine ou présente une structure de support intérieure.

4. Moyen de sécurité pour panne et/ou accident (1) selon l'une quelconque des revendications précédentes, **caractérisé en ce que** le moyen d'avertissement (4) au moins éclate lors de l'écrasement par un véhicule automobile.

5. Moyen de sécurité pour panne et/ou accident (1) selon l'une quelconque des revendications précédentes, **caractérisé en ce que** c'est un corde de remorquage.

6. Moyen de sécurité pour panne et/ou accident (1) selon l'une quelconque des revendications précédentes, **caractérisé en ce qu'**il est au moins partiellement réfléchissant à la lumière, auto-éclairant ou clignotant.

7. Procédé de mise en sécurité d'un lieu d'accident et/ou d'un véhicule accidenté et/ou en panne à l'aide d'un moyen de sécurité pour panne et/ou accident (1) selon l'une quelconque des revendications précédentes, **caractérisé en ce que** le moyen de sécurité pour panne et/ou accident est fixé à une glissière de sécurité et est ensuite amené au moins sur une voie de circulation.

8. Procédé selon la revendication 7, **caractérisé en ce que** les deux extrémités du moyen de sécurité sont raccordées à la glissière de sécurité.

9. Procédé selon la revendication 7, **caractérisé en ce que** le moyen de sécurité pour panne et/ou accident (1) est placé en forme de N sur la voie de circulation.
